(19) Europäisches Patentamt / European Patent Office / Office européen des brevets

(11) **EP 4 660 945 A1**

(12) **DEMANDE DE BREVET EUROPEEN**

(43) Date de publication:
**10.12.2025 Bulletin 2025/50**

(21) Numéro de dépôt: **25160059.9**

(22) Date de dépôt: **25.02.2025**

(51) Classification Internationale des Brevets (IPC):
**G06T 7/50** *(2017.01)* **G06T 17/00** *(2006.01)*

(52) Classification Coopérative des Brevets (CPC):
**G06T 7/50; G06T 17/00;** G06T 2207/30196

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(30) Priorité: **07.06.2024 FR 2406012**

(71) Demandeur: **IDEMIA Public Security France
92400 Courbevoie (FR)**

(72) Inventeurs:
• **PERRAULT, Pierre
92400 COURBEVOIE (FR)**
• **MARTIN, Drazic
92400 COURBEVOIE (FR)**

(74) Mandataire: **IPS
2, place Samuel de Champlain
92400 Courbevoie (FR)**

(54) **MÉTHODE ET SYSTÈME DE RECONSTRUCTION DE LA FORME TRIDIMENSIONNELLE D'UN OBJET À PARTIR D'UNE IMAGE MONOCULAIRE**

(57) Méthode de reconstruction de l'enveloppe tridimensionnelle d'un objet O à partir d'une image monoculaire 1000. La méthode comprend les étapes suivantes :

(a) Fournir 5001 une enveloppe tridimensionnelle d'épreuve E de l'objet O par traitement de l'image monoculaire 1000 ;

(b) Obtenir 5002 une première enveloppe tridimensionnelle modifiée EH1 par application, sur l'enveloppe tridimensionnelle d'épreuve E, d'une première transformation géométrique ;

(c) Obtenir 5003 une deuxième enveloppe tridimensionnelle modifiée EH2 par application, sur la première enveloppe tridimensionnelle modifiée EH1, d'une deuxième transformation géométrique ;

(d) Obtenir 5004 une troisième enveloppe tridimensionnelle modifiée EH3, par application, sur la deuxième enveloppe tridimensionnelle modifiée EH2, d'une troisième transformation géométrique.

[Fig. 5]

Fig. 5

## Description

## Domaine technique

La présente invention concerne une méthode et un système de reconstruction de la forme tridimensionnelle d'un objet à partir d'une image monoculaire.

## Arrière-plan technique

Il est courant de détecter et compter des individus formant une foule dans les espaces communs accueillant du public tels que les rues, les gares, les aéroports, les places, les forums, les lieux de pèlerinage, les lieux d'exposition, les salles de concerts et autres évènements. Cette détection et ce comptage permettent notamment la mise en œuvre d'un certain nombre de moyens de renseignement, d'organisation, d'équipement et de logistique. Ces moyens s'étendent, par exemple, du simple reportage journalistique pour une mesure d'audience jusqu'aux mesures administratives ou policières de sécurité et sureté publiques en passant par la régulation de la fréquentation des sites ou encore l'évacuation des personnes en cas d'incidents. Des études statistiques fondées sur ces actions peuvent également fournir des renseignements essentiels pour établir et/ou optimiser des plans d'évacuation en cas d'incendie, concevoir des aménagements adaptés des espaces ou encore organiser des circuits de circulation pour fluidifier les mouvements de foule. Elles forment aussi un cadre d'étude, de modélisation et d'anticipation des comportements collectifs lors des mouvements de foule.

Les foules présentent des densités et des répartitions spatiales très diverses, et ne sont généralement pas homogènes. Elles peuvent notamment s'étaler autour d'éléments mobiliers, d'éléments de bâtiment, d'éléments de paysage tels que les arbres et arbustes, ou d'autres d'objets, tels que des véhicules stationnés ou en mouvement. A titre d'exemples, une foule peut simplement être constituée d'un groupe de piétons éparses circulant dans une rue, d'un groupe dense de coureurs ou de marcheurs lors d'un marathon ou d'une manifestation, ou encore d'un groupe d'individus sensiblement statiques lors d'un concert, un festival ou dans un hall de gare ou d'aéroport.

Cependant, au-delà de la simple détection et comptage des individus, avoir à disposition une représentation tridimensionnelle des individus d'une foule et de l'environnement dans lequel elle évolue peut aussi apporter des renseignements complémentaires sur l'agencement des individus entre eux, leur répartition dans cet environnement, leurs interactions et leurs mouvements. Grâce à une représentation tridimensionnelle, il est possible de procéder à des changements d'angles de vue afin de révéler des détails autrement dissimulés par des effets de perspectives ou des obstacles. A titre d'exemple, dans le cas de l'examen des circonstances d'un délit, d'un crime ou d'une infraction, ou simplement pour prévenir la commission d'actes juridiquement répréhensibles, une représentation tridimensionnelle d'une foule peut être un moyen, pour les autorités judiciaires, de récupération de preuves ou d'indices habituellement inaccessibles sur des images bidimensionnelles.

Or, la plupart des systèmes de vidéosurveillance repose sur un réseau de caméras monoculaires dans lequel chacune des caméras monoculaires est disposée de manière à couvrir une zone différente de l'environnement dans lequel évolue une pluralité d'éléments ou objets mobiles tels que des individus ou des véhicules. Dès lors la difficulté est de reconstruire la forme tridimensionnelle de ces objets à partir d'une image monoculaire. En particulier, dans le cas d'individus humains, il s'agit de déterminer la posture et la forme des individus (« Human Pose & Shape » (HPS)).

Kocabas, Muhammed, et al. (2021), "SPEC: Seeing people in the wild with an estimated camera", Proceedings of the IEEE/CVF International Conference on Computer Vision, décrit une méthode d'estimation de la pose et de la forme d'un individu par application successive de deux réseaux de neurones sur une image monoculaire d'un individu. Le premier réseau est entraîné pour estimer le champ de vision et les angles de tangage et de roulis à partir de l'image. Le deuxième réseau de neurones est entrainé pour concaténer les paramètres de calibration de la caméra estimés par le premier réseau avec les caractéristiques (« features ») de l'image afin de régresser la pose et la forme de l'individu.

Li, Zhihao, et al., (2022), "Cliff: Carrying location information in full frames into human pose and shape estimation", European Conference on Computer Vision. Cham: Springer Nature Switzerland, décrit une méthode d'estimation de la pose et de la forme d'un individu à partir d'une image monoculaire mettant en œuvre un réseau de neurones fondé sur une architecture HMR. La partie HMR du réseau prend, comme donnée d'entrée, une image recadrée de l'individu tandis que des informations relatives à l'environnement de l'individu sont extraites de la partie rognée de l'image recadrée et réintroduites dans le réseau de neurones juste après l'étape d'encodage par la partie HMR. Enfin, le réseau de neurones est configuré pour procéder à une projection des articulations 3D sur l'image originale afin de permettre le calcul d'une fonction de perte de rétroprojection 2D.

Sun, Yu, et al. (2022), "Putting people in their place: Monocular regression of 3D people in depth", Proceedings of the IEEE/CVF Conference on Computer Vision and Pattern Recognition, décrit méthode d'estimation de la pose et de la forme des individus d'une pluralité d'individus à partir d'une image monoculaire. La méthode est fondée sur un réseau de neurones entraîné pour estimer la translation 3D de tous les individus en combinant la vue dans le plan image avec une vue plongeante de type vol d'oiseau (« Bird's Eye View »). La vue plongeante est représentée par une carte thermique (« heatmap ») qui estime la probabilité d'un individu d'être à une certaine profondeur et une carte de compensation (« offset map ») pour corriger la profondeur. Le réseau de neurone est entrainé sur un ensemble d'images annotées précisant la profondeur des individus.

**Résumé de l'invention**

Problème technique

Un inconvénient des méthodes disponibles pour estimer la position et la forme tridimensionnelle d'objets à partir d'une image monoculaire est leur manque de flexibilité. Dès lors que les caractéristiques ou les conditions d'acquisition d'une image monoculaire sont différentes de celles des images sur lesquelles ces méthodes ont été entrainées, il est fréquent que ces méthodes échouent à estimer correctement la position et la forme tridimensionnelle des objets. Cet échec est notable lorsque, par exemple, la position de la caméra ayant acquise l'image ou les variations d'échelles sont inhabituelles. Une explication est la rareté, voire l'absence, d'ensemble d'entraînement comprenant des images monoculaires représentatives de toutes les configurations et de tous les types d'environnement possibles.

Il existe donc un besoin pour une solution flexible, simple et robuste permettant de reconstruire la forme tridimensionnelle d'un objet à partir d'une image monoculaire.

Solution technique

Selon un premier aspect de l'invention, il est fourni une méthode telle que décrite dans la revendication 1.

Selon un deuxième aspect de l'invention, il est fourni un dispositif de traitement de données comprenant des moyens pour mettre en œuvre une méthode selon le premier aspect.

Selon un troisième aspect de l'invention, il est fourni un programme d'ordinateur comprenant des instructions qui, lorsque le programme est exécuté par un ordinateur, conduisent celui-ci à mettre en œuvre une méthode selon le premier aspect.

Selon un quatrième aspect de l'invention, il est fourni un support de stockage lisible par ordinateur comprenant des instructions qui, lorsqu'elles sont exécutées par un ordinateur, conduisent celui-ci à mettre en œuvre une méthode selon le premier aspect.

Selon un cinquième aspect de l'invention, il est fourni un système de reconstruction de la forme tridimensionnelle d'un objet à partir d'une image monoculaire.

**Brève description des dessins**

Fig. 1 est une représentation schématique d'un ensemble d'individus sur une place publique.

Fig. 2 est une représentation schématique d'une carte des enveloppes tridimensionnelles de certains individus du groupe de la Fig. 1.

Fig. 3 est une représentation schématique d'une carte des enveloppes tridimensionnelles de la Fig. 2 selon un point de vue latéral.

Fig. 4 est une représentation schématique détaillée du groupe III d'enveloppes tridimensionnelles de la Fig. 3.

Fig. 5 est un ordinogramme d'une méthode conformément au premier aspect de l'invention.

Fig. 6 est une représentation schématique d'une première transformation géométrique d'une enveloppe tridimensionnelle selon un mode de réalisation.

Fig. 7 est une représentation schématique d'une deuxième transformation géométrique d'une enveloppe tridimensionnelle selon un mode de réalisation.

Fig. 8 est une représentation schématique du résultat de la deuxième transformation géométrique illustrée sur la Fig. 7.

Fig. 9 est une représentation schématique d'une troisième transformation géométrique d'une enveloppe tridimensionnelle selon un mode de réalisation.

Fig. 10 est une représentation schématique d'une carte d'enveloppes tridimensionnelles d'objets obtenue à partir de la carte de la Fig. 3 après application d'une méthode conformément au premier aspect de l'invention.

Fig. 11 est une représentation schématique d'un dispositif de traitement de données conformément au deuxième aspect de l'invention.

**Description détaillée des modes de réalisation**

Au sens de la présente invention, il convient d'entendre par « image monoculaire d'au moins un objet » une image, telle qu'une photographie ou une extraction vidéo, obtenue à l'aide d'un monoculaire et sur laquelle est représenté une scène avec au moins un objet tel qu'un individu humain, un animal ou un véhicule. L'image peut représenter une pluralité d'objets de même nature ou de nature différente. De préférence, l'image est une image en perspective, c'est-à-dire que les objets se situent à différentes profondeurs de champs.

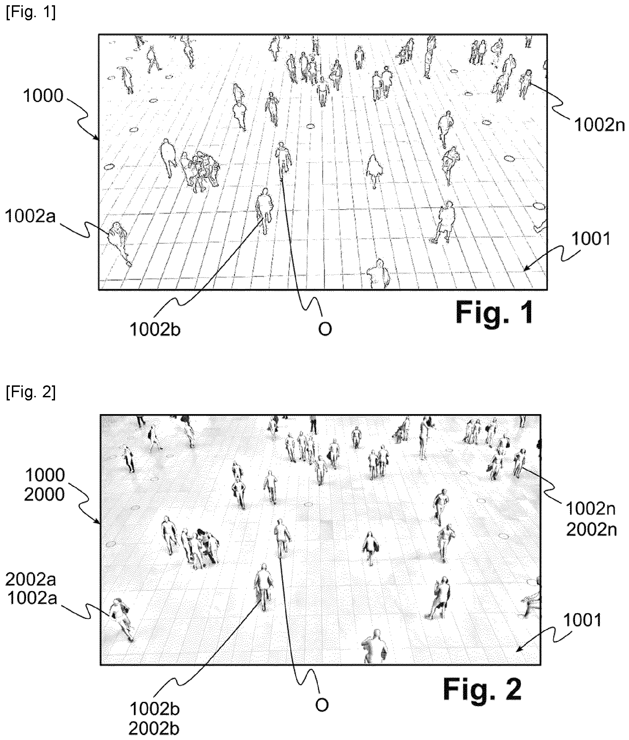

En référence à la Fig. 1, un exemple d'image monoculaire représentant une scène contenant au moins un objet peut être une l'image monoculaire 1000 d'une foule d'individus 1002a-n circulant sur une place publique 1001. L'image peut être prise par une caméra monoculaire de surveillance ou un appareil photographique (non représentée).

L'extraction d'une enveloppe tridimensionnelle, également appelé modèle tridimensionnel ou encore « avatar », d'un objet tel qu'un individu à partir d'une image monoculaire est une opération courante. Dans le cadre de l'invention, cette extraction peut être réalisée au moyen de toute méthode adaptée. Des exemples de méthode d'extraction sont détaillés dans les articles Kocabas, Muhammed, et al. (2021), "SPEC: Seeing people in the wild with an estimated camera", Proceedings of the IEEE/CVF International Conference on Computer Vision, Li, Zhihao, et al., (2022), "Cliff: Carrying location information in full frames into human pose and shape estimation", European Conference on Computer Vision. Cham: Springer Nature Switzerland, et Sun, Yu, et al. (2022), "Putting people in their place: Monocular regression of 3D people in depth", Proceedings of the IEEE/CVF Conference on Computer Vision and Pattern Recognition.

En référence à la Fig. 2, une méthode d'extraction telle que celle décrite dans Li, Zhihao, et al., (2022), "Cliff: Carrying location information in full frames into human pose and shape estimation", European Conference on Computer Vision. Cham: Springer Nature Switzerland, permet d'extraire une enveloppe tridimensionnelle 2002a-n pour chacun des individus détectés 1001a-n dans l'image monoculaire 1001 de la Fig. 1. Sur la Fg. 2, l'ensemble des enveloppes tridimensionnelles 2002a-n forment une carte 2000 superposée à l'image originale 1001, les enveloppes tridimensionnelles 2002a-n se superposent aux individus 1001a-n. La carte des enveloppes tridimensionnelles 2002a-n comprend généralement uniquement les modèles 2002a-n, le sol 1001 n'y est pas représenté.

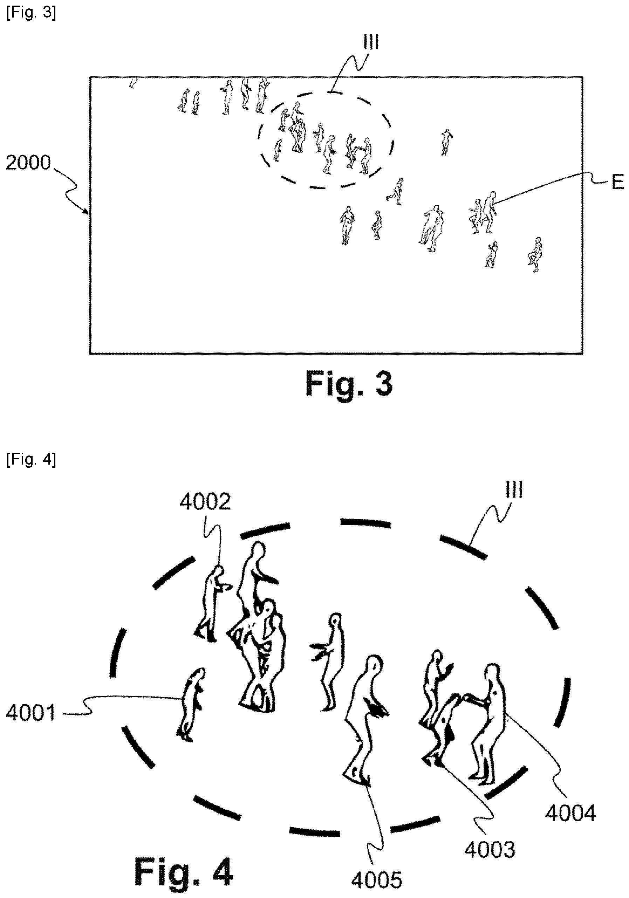

A partir de la carte 2000 des enveloppes tridimensionnelles 2002a-n des individus 1001a-n, différents points de vue de la scène de la Fig. 1 peuvent être simulés en modifiant la perspective ou la position initiale de la caméra. A titre d'exemple, en référence à la Fig. 3, en modifiant fictivement la position de la caméra (non représentée) en lui faisant parcourir un arc (« arc shot ») depuis sa position initiale dans la Fig. 2, il est possible de construire une représentation de la scène selon un point de vue latéral dans laquelle les enveloppes tridimensionnelles 2002a-n sont vus de côté.

Or, comme expliqué précédemment et illustré sur la Fig. 3, les méthodes actuelles de l'état de la technique échouent non seulement à repositionner les enveloppes tridimensionnelles sur le sol mais en outre à les redimensionner correctement selon les règles de perspective en fonction de la nouvelle position de la caméra. Sur la Fig. 3, les enveloppes tridimensionnelles n'occupent pas une position naturelle. Elles ne sont pas alignées selon une direction oblique correspondant au plan de référence du sol 1001 de la Fig. 1. Au contraire, elles « flottent » dans les airs et se répartissent aléatoirement par groupe compact selon plusieurs directions obliques. En outre, les dimensions géométriques des enveloppes tridimensionnelles se jouxtant sont totalement hétérogènes. En effet, en référence à la Fig. 4 sur laquelle est représenté de manière détaillée le groupe III de la Fig. 3, certaines enveloppes tridimensionnelles 4001, 4002, 4003 ont des dimensions géométriques beaucoup plus petites que celles d'autres enveloppes tridimensionnelles 4004, 4005, alors qu'ils devraient avoir des dimensions relativement similaires pour une même catégorie d'individus (enfants, adultes, hommes, femmes...).

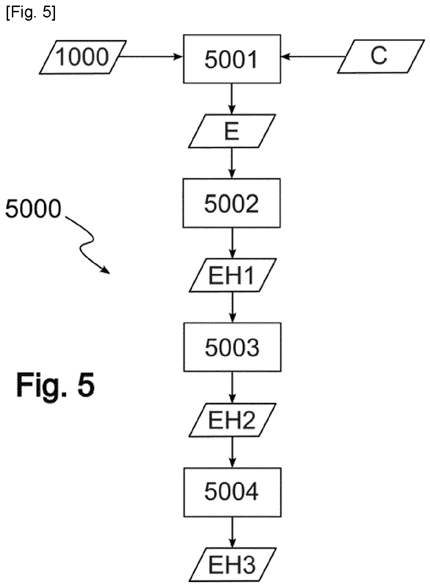

En référence aux Fig. 1, 2, 3 & 5-10, selon un premier aspect de l'invention, il est fourni une méthode 5000 mise en œuvre par ordinateur, de reconstruction de l'enveloppe tridimensionnelle d'un objet O à partir d'une image monoculaire 1000, la méthode prend, en données d'entrée, une image monoculaire 1000 d'au moins un objet O dans une scène et la position C, dans le repère du monde réel, du centre optique de la caméra 6001 représentative du dispositif optique d'acquisition de la dite image monoculaire 1000, et fournit, en donnée de sortie, une enveloppe tridimensionnelle dudit objet O dans ladite scène, la méthode comprend les étapes suivantes :

(a) Fournir 5001 une enveloppe tridimensionnelle d'épreuve E de l'objet O par traitement de l'image monoculaire 1000 ;

(b) Obtenir 5002 une première enveloppe tridimensionnelle modifiée EH1 par application, sur l'enveloppe tridimensionnelle d'épreuve E, d'une première transformation géométrique de sorte qu'un point représentatif P1 d'une extrémité inférieure de l'enveloppe tridimensionnelle d'épreuve E soit contenu dans un premier plan P de référence préalablement défini correspondant à un sol ;

(c) Obtenir 5003 une deuxième enveloppe tridimensionnelle modifiée EH2 par application, sur la première enveloppe tridimensionnelle modifiée EH1, d'une deuxième transformation géométrique de sorte qu'un plan longitudinal représentatif de l'objet soit perpendiculaire à un deuxième plan D de référence, ledit plan D de référence est défini par la position C du centre optique de la caméra 6001, le point P1-1 représentatif d'une extrémité inférieure et un point P2-1 représentatif d'une extrémité supérieure de la première enveloppe tridimensionnelle EH1 ;

(d) Obtenir 5004 une troisième enveloppe tridimensionnelle modifiée EH3, par application, sur la deuxième enveloppe tridimensionnelle modifiée EH2, d'une troisième transformation géométrique de sorte que les dimensions géométriques de la troisième enveloppe tridimensionnelle modifiée EH3 projeté dans l'image monoculaire 1000 correspondent aux dimensions originales de l'objet O dans l'image monoculaire 1000.

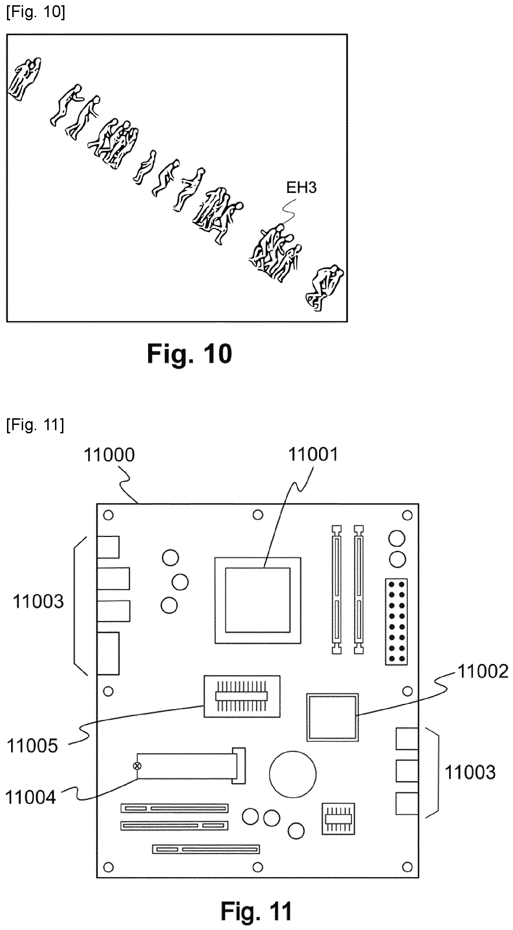

Un premier effet remarquable de l'invention est la conservation de l'ancrage au sol de l'enveloppe tridimensionnelle EH3 de l'objet, et ce quel que soit l'angle ou le point de vue choisi ultérieurement pour représenter la scène. Notamment, comme illustré sur la Fig. 10, comparativement à la Fig. 3, lorsque la méthode est appliquée sur les objets d'une foule d'objets, leurs enveloppes tridimensionnelles restent toutes fixées et alignées selon une direction oblique correspondant au plan de référence représentant le sol 1001 de la Fig. 1.

Un deuxième effet remarquable de l'invention est la conservation des proportions géométriques et de l'orientation des enveloppes tridimensionnelles conformément à la distance et à la direction d'observation de la caméra. Ainsi, la posture et la forme des enveloppes tridimensionnelles demeurent représentatives de celles attendues lors d'un changement d'angle ou de point de vue. En référence à la Fig. 10, comparativement à la Fig. 3, les dimensions des enveloppes tridimensionnelles se jouxtant restent comparables pour une même catégorie d'individus.

L'invention permet ainsi avantageusement de fournir des renseignements représentatifs et réalistes sur l'agencement des objets, leur répartition dans cet environnement, leurs interactions et leurs mouvements dans l'environnement dans lequel ils évoluent. Des détails autrement dissimulés par des effets de perspectives ou des obstacles peuvent être alors correctement révélés en faisant varier les angles de vue.

Dans la suite du propos, pour des raisons de concision, les détails et différents modes de réalisation de la méthode selon l'invention sont décrits pour une image monoculaire d'une scène comprenant une foule d'individus humains. Cependant, cette approche est purement illustrative et il convient d'y voir aucune forme de limitation de l'invention. La méthode peut être appliquée sur une image monoculaire d'une scène comprenant tout type d'objet tel qu'un individu humain, un animal ou un véhicule.

A l'étape (a), une enveloppe tridimensionnelle d'épreuve E de l'objet O est obtenu par traitement de l'image monoculaire 1000. Le traitement est un traitement d'image de tout type adapté pour extraire une enveloppe tridimensionnelle. De préférence, l'enveloppe tridimensionnelle d'épreuve (E) est obtenue à l'aide d'un réseau de neurones artificiels convolutif préalablement entrainé. A titre d'exemples, elle peut être une méthode décrite dans l'un quelconque des articles cités précédemment, en particulier dans l'article cité dans le cadre de la discussion en référence à la Fig. 2.

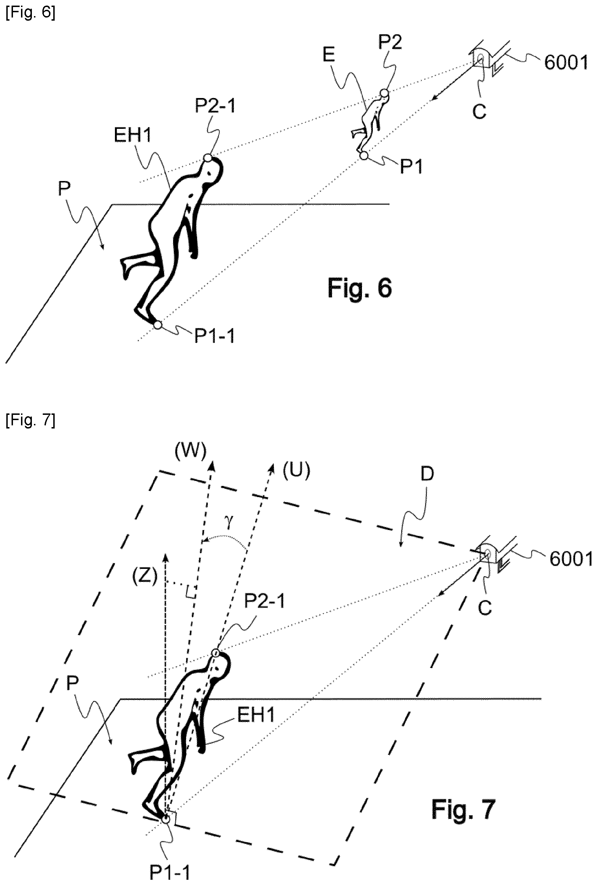

A l'étape (b), en référence à la Fig. 6, une première transformation géométrique est appliquée sur l'enveloppe tridimensionnelle d'épreuve E de sorte qu'un point représentatif P1 d'une extrémité inférieure de l'enveloppe tridimensionnelle d'épreuve E soit contenu dans un premier plan P de référence préalablement défini correspondant à un sol. Sur la Fig. 6, le point image du point représentatif P1 est noté P1-1 et est contenu dans le plan P de référence. L'enveloppe tridimensionnelle modifiée après transformation est noté EH1.

Le point représentatif P1 d'une extrémité inférieure de l'objet est de tout type adapté. Son choix dépend généralement de la nature et de la position des objets. Selon certains modes préférés de réalisation, lorsque l'objet est un individu humain en position verticale, l'extrémité inférieure de l'enveloppe tridimensionnelle d'épreuve E de l'individu humain correspond aux pieds dudit individu humain. Le point représentatif (P1), avant transformation, peut alors être choisi au niveau du talon, de la voûte plantaire ou de l'orteil de l'individu. Alternativement, l'extrémité inférieure peut être un membre inférieur, une articulation inférieure ou les fessiers. Dans ce cas, puisque le point représentatif étant sélectionné dans une zone plus élevée du corps de l'individu, il est préférable de prévoir une distance de compensation par rapport au premier plan (P) de référence préalablement défini correspondant à un sol afin d'éviter qu'à l'issue de la première transformation géométrique, la toute ou partie de l'extrémité inférieure ne se retrouve en dessous dudit plan de référence.

La première transformation géométrique est de tout type adapté pour placer point représentatif P1 d'une extrémité inférieure de l'enveloppe tridimensionnelle d'épreuve E soit contenu dans un premier plan P de référence. A titre d'exemple, elle peut être une translation selon une direction défini par rapport l'angle de vue de la caméra 6001 représentative du dispositif optique d'acquisition de ladite image monoculaire 1000. Selon la distance sur laquelle l'enveloppe tridimensionnelle d'épreuve (E) est déplacée, sa taille peut alors être ou plus petite ou plus grande que la taille attendue, du point de vue de la caméra 6001, à la distance focale où l'enveloppe tridimensionnelle d'épreuve (E) se situe après déplacement. L'opération de translation peut alors être complétée par une opération d'agrandissement ou de rétrécissement afin que la taille de l'enveloppe tridimensionnelle soit conforme à la taille attendue à cette distance.

Selon certains modes préférés de réalisation, la première transformation géométrique est une homothétie avec la position C de la caméra comme le centre d'homothétie. Une telle transformation est avantageuse en ce qu'elle permet de placer le point représentatif P1 d'une extrémité inférieure de l'enveloppe tridimensionnelle d'épreuve E dans le premier plan P de référence toute en conservant les proportions.

Dans l'exemple illustré sur la Fig. 6, le point représentatif P1 d'une extrémité inférieure de l'enveloppe tridimensionnelle d'épreuve E est déplacé en un point image P1-1 selon la direction CP1, et le point représentatif P2 d'une extrémité supérieure de l'enveloppe tridimensionnelle d'épreuve E est déplacé en un point image P2-1 selon la direction CP2. Le rapport algébrique $\frac{\overline{CP1}}{\overline{CP1-1}} = \frac{\overline{CP2}}{\overline{CP2-1}}$ est supérieur à 1 ; l'enveloppe tridimensionnelle modifié EH1 est un agrandissement de l'enveloppe tridimensionnelle d'épreuve E et son extrémité inférieure est placé sur le plan P de référence.

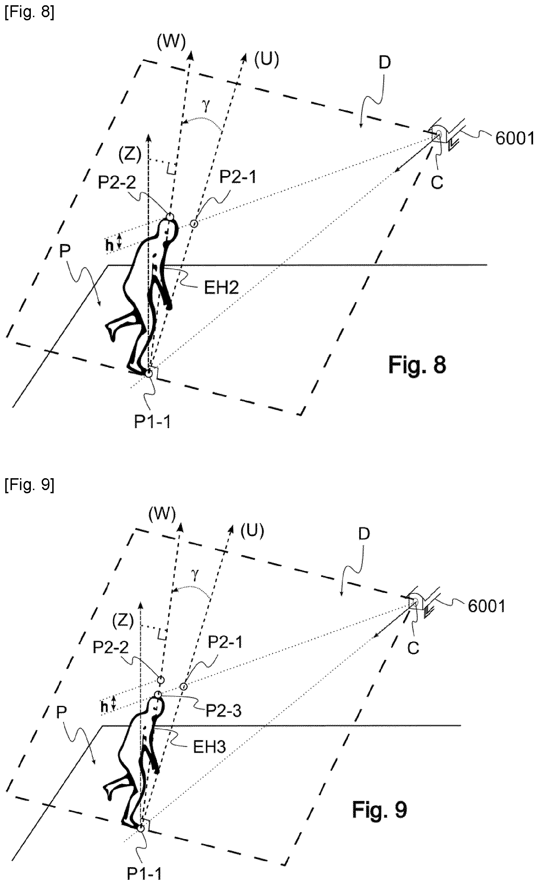

A l'étape (c), en référence aux Fig. 7 & 8, une deuxième transformation géométrique est appliquée à la première enveloppe tridimensionnelle modifiée EH1 de sorte qu'un plan longitudinal représentatif de l'objet soit perpendiculaire à un deuxième plan D de référence défini par la position C du centre optique de la caméra 6001, le point P1-1 représentatif d'une extrémité inférieure et un point P2-1 représentatif d'une extrémité supérieure du deuxième modèle EH1. Dans l'exemple des Fig. 7 & 8, le plan longitudinal représentatif de l'objet perpendiculaire au deuxième plan D de référence est défini par les deux directions Z et W partant du point P1-1, la direction W est contenue dans le plan D. Pour un individu humain en position verticale, selon son orientation, le plan longitudinal peut correspondre au plan sagittal, au plan coronal ou à un plan intermédiaire entre ces deux plans.

Sur la Fig. 7, est représentée la première enveloppe modifiée EH1 avant la deuxième transformation géométrique. Sur la Fig. 8, est représentée la deuxième enveloppe modifiée EH2 après l'application de la deuxième transformation géométrique sur la première enveloppe modiée EH1

Le point P2-1 représentatif d'une extrémité supérieure de la première enveloppe tridimensionnelle EH1 est de tout type adapté. Selon certains modes préférés de réalisation, la partie supérieure de la première enveloppe tridimensionnelle EH1 est choisie parmi la tête, le cou, les épaules, ou la poitrine de l'individu humain. De préférence, la partie supérieure correspond à la tête et le point P2-1 représentatif est choisi vers le sommet du crâne de l'individu que représente la première enveloppe tridimensionnelle modifiée (EH1).

Selon certains modes préférés de réalisation, la deuxième transformation géométrique est une rotation ayant, pour centre de rotation, le point représentatif P1-1 de l'enveloppe tridimensionnelle modifiée EH1, de sorte qu'une première direction U représentative d'une direction longitudinale de l'objet et une deuxième direction W coïncident, la deuxième direction W est une projection orthogonale, dans le deuxième plan D de référence, d'une direction Z orthogonale au premier plan P de référence au point représentatif P1-1 de la partie inférieure de la première enveloppe modifiée EH1. Dans l'exemple des Fig. 7 & 8, la première direction U est définie par les points P1-1 et P2-1 représentatifs, respectivement, de la partie inférieure et de la partie supérieure de l'enveloppe tridimensionnelle modifiée EH1. Alternativement, elle peut être définie par toute autre coupe de points représentatifs des parties inférieure et supérieure de l'enveloppe tridimensionnelle EH1. Sur les Fig. 6 &7, la rotation est représentée par l'angle y entre la première direction U et la deuxième direction W. Le point P2-2 de la partie supérieure de l'enveloppe tridimensionnelle modifiée EH2 est l'image du point P2-1 représentatif de la partie supérieure de l'enveloppe tridimensionnelle modifiée EH1.

A l'étape (d), en référence à la Fig. 9, une troisième transformation géométrique est appliquée sur la deuxième enveloppe tridimensionnelle modifiée EH2 de sorte que les dimensions géométriques du la troisième enveloppe tridimensionnelle modifiée EH3 projeté dans l'image monoculaire 1000 correspondent aux dimensions originales de l'objet O dans l'image monoculaire 1000. Cette étape a pour effet de redimensionner l'enveloppe tridimensionnelle afin de compenser les éventuelles variations de ses dimensions à l'issue de la deuxième transformation géométrique. La taille de l'enveloppe tridimensionnelle est alors conforme à celle attendue dans plan focal de la caméra 6001 dans lequel elle se situe.

Dans l'exemple sur la Fig. 8, à l'issue de la deuxième transformation géométrique, la taille de la deuxième enveloppe tridimensionnelle est plus importante que celle qu'elle devrait avoir à cette distance de la caméra 6001. Cette différence de taille est représentée par la distance h entre les points P2-1 et P2-2. Comme illustrée sur le Fig. 9, à l'issue de la troisième transformation géométrique, les dimensions géométriques de la troisième enveloppe tridimensionnelle modifiée EH3 sont réduites par rapport à celles de la deuxième enveloppe tridimensionnelle modifiée EH2, le point représentatif P2-2 a alors pour image le point représentatif P2-3. La taille de l'enveloppe tridimensionnelle EH3 devient ainsi conforme à la focale de la caméra 6001 à la distance où elle se trouve de la caméra.

Selon certains modes préférés de réalisation, la troisième transformation géométrique est une homothétie avec le point représentatif P1-1 de l'extrémité inférieure de l'enveloppe tridimensionnelle modifiée EH3 comme centre d'homothétie. L'homothétie a pour avantage de conserver les proportions de l'enveloppe tridimensionnelle lors de son redimensionnement.

Dans l'exemple illustré sur la Fig. 9, le point représentatif P2-2 de l'extrémité supérieure de la deuxième enveloppe tridimensionnelle est déplacé en un point image P2-3 selon la direction P1-1P2-2. Le rapport algébrique $\frac{\overline{P1-1P2-3}}{\overline{P1-1P2-2}}$ est inférieur à 1 ; l'enveloppe tridimensionnelle modifié EH3 est une réduction de la deuxième enveloppe tridimensionnelle modifiée EH2, et le point représentatif P2-3 est aligné avec le point représentatif P1-1 de l'extrémité supérieure de la première enveloppe tridimensionnelle et la position C du centre optique de la caméra 6001.

A l'étape (a), lors de l'extraction de l'enveloppe tridimensionnelle d'épreuve E de l'objet O par traitement de l'image monoculaire 1000, il est courant que l'arrière-plan de l'image correspondant au décor de la scène soit supprimé. Comme illustré sur la Fig. 3 ou la Fig. 10, pour une foule d'individus, il en résulte une carte d'enveloppes tridimensionnelles des individus sur un fond neutre.

Selon certains modes de réalisation, la méthode comprend en outre une étape d'ajout d'un arrière-plan choisi parmi un arrière-plan correspondant à celui de la scène de l'image monoculaire originale ou un arrière-plan artificiel. L'ajout d'un arrière-plan correspondant à celui de la scène de l'image monoculaire originale permet de replacer les enveloppes tridimensionnelles dans le contexte de la scène de l'image monoculaire originale. Il est ainsi possible de fournir des renseignements complémentaires sur les potentielles interactions des individus avec d'autres objets fixes ou mobiles de la scène ou sur leur position par rapport à certaines zones géographiques particulières de la scène. En revanche, l'ajout d'un arrière-plan artificiel, tel qu'un paysage neutre ou une simple place, peut avantageusement permettre de préserver la confidentialité des lieux de la scène. Par exemple, dans un lieu privé, tel qu'une entreprise, préserver la confidentialité des lieux peut être essentielle afin d'éviter la divulgation de certains savoir-faire ou secrets de fabrique.

Selon certains modes de réalisation, la méthode comprend en outre une étape de texturation de l'enveloppe tridimensionnelle modifiée EH3 de l'objet O. Cette étape supplémentaire peut être particulièrement avantageuse lorsque l'objet est un individu et qu'il est nécessaire de protéger son identité en évitant que certains de ses caractères biométriques permettant son identification soient révélés. Par exemple, dans le cadre d'une étude, d'une modélisation et d'une anticipation des comportements collectifs lors des mouvements d'une foule d'individus, l'identité des individus de la foule n'est généralement pas une donnée pertinente. Il convient donc de protéger cette identité en texturant les enveloppes tridimensionnelles des individus. De même, dans le cadre d'une enquête policière, il peut être avantageux de protéger l'identité des individus d'une foule qui n'ont aucun lien pertinent avec l'enquête.

Selon certains modes de réalisation, la méthode comprend en outre au moins une étape de changement de perspective ou d'angle de vue. Puisque la méthode selon l'invention permet une représentation réaliste de l'agencement des objets dans l'environnement d'une scène, un changement de perspective ou d'angle de vue peut être avantageux pour une meilleure compréhension des interactions entre ces objets et la mise en évidence d'éléments de la scène autrement dissimulés. En particulier, dans le cas où l'objet est un individu humain, un tel changement peut révéler la manière dont il interagit avec son environnement.

Comme souligné précédemment, la méthode selon l'invention peut être appliqué sur une image monoculaire représentant une scène dans laquelle évoluent tout type d'objet. Selon certains modes avantageux d'utilisation, elle peut être mise en œuvre pour la reconstruction d'une image tridimensionnelle d'une pluralité d'individus humains dans un lieu public ou privé. Elle permet ainsi une étude de la scène dans laquelle la répartition des individus dans l'espace et leurs relations peuvent être examinées précisément.

La méthode selon le premier aspect de l'invention est mise en œuvre par ordinateur. En référence à la Fig. 11, selon un deuxième aspect de l'invention, il est fourni un dispositif 11000 de traitement de données comprenant des moyens pour la mise en œuvre d'une méthode selon l'un des quelconques modes de réalisation du premier aspect de l'invention.

Le dispositif 11000 de traitement de données, généralement appelé ordinateur, peut être chargé d'exécuter automatiquement des séquences d'opérations arithmétiques ou logiques pour réaliser des tâches ou des actions. Il peut comprendre une ou plusieurs unités centrales de traitement (CPU) 11001 et/ou un ou plusieurs processeurs graphiques (GPU) 11002 ainsi qu'un dispositif 11005 de communication entre ces unités et les autres composants du dispositif. Il peut également comprendre d'autres composants électroniques tels que des interfaces d'entrée/sortie 11003, des dispositifs de stockage non volatils ou volatils 11004, et des bus de communication pour le transfert de données entre les composants internes du dispositif ou avec des composants externes. L'un des dispositifs d'entrée/sortie 11003 peut être une interface de connexion d'un dispositif d'interaction homme-machine, notamment une interface utilisateur graphique tel qu'un écran pour afficher des informations compréhensibles par l'homme et/ou envoyer des données et/ou instructions au dispositif 11000 de traitement de données.

Selon un troisième aspect de l'invention, il est fourni un programme d'ordinateur comprenant des instructions qui, lorsque le programme est exécuté par un ordinateur, conduisent celui-ci à mettre en œuvre une méthode selon l'un des quelconques modes de réalisation du premier aspect de l'invention.

Tout type de langage de programmation, compilé ou interprété, peut être utilisé pour mettre en œuvre les étapes de la méthode de l'invention. Le programme d'ordinateur peut faire partie d'une solution logicielle, c'est-à-dire d'une collection d'instructions exécutables, de codes, de scripts ou autres et/ou de bases de données.

Selon un quatrième aspect de l'invention, il est fourni un support d'enregistrement 11004 lisible par ordinateur comprenant des instructions qui, lorsqu'elles sont exécutées par un ordinateur, conduisent celui-ci à mettre en œuvre une méthode selon l'un des quelconques modes de réalisation du premier aspect de l'invention.

Le support d'enregistrement 11004 lisible par ordinateur est de préférence une mémoire non volatile, par exemple un disque dur ou un lecteur à semiconducteurs. Il peut être un support de stockage amovible ou un support de stockage non amovible faisant partie d'un ordinateur. Le support d'enregistrement 11004 lisible par ordinateur peut également être une mémoire volatile à l'intérieur d'un support amovible. Cela peut faciliter le déploiement de l'invention dans de nombreux sites de production.

Le support d'enregistrement 11004 lisible par ordinateur peut faire partie d'un ordinateur utilisé comme serveur à partir duquel des instructions exécutables peuvent être téléchargées et, lorsqu'elles sont exécutées par un ordinateur, faire en sorte que l'ordinateur exécute une méthode selon l'un des modes de réalisation décrits dans le présent document.

Le programme d'ordinateur et le support 11004 sur lequel il est enregistré peuvent être mis en œuvre dans un environnement informatique distribué, par exemple l'informatique en nuage. Les instructions peuvent être exécutées sur un serveur auquel un ou plusieurs ordinateurs clients peuvent se connecter et fournir des données codées en tant que données d'entrée d'une méthode selon l'un quelconque des modes de réalisation du premier aspect de l'invention. Une fois les données traitées, le résultat peut être téléchargé et décodé sur l'ordinateur client ou être envoyé directement, par exemple, sous forme d'instructions.

Selon un troisième aspect de l'invention, il est fourni un système de reconstruction de la forme tridimensionnelle EH3 d'un objet O à partir d'une image binoculaire 10000. Le système comprend :

- un dispositif optique d'acquisition d'une image monoculaire 1000 ;
- un dispositif 11004 de traitement de données selon le deuxième aspect de l'invention configuré pour recevoir une image monoculaire 1000 acquise par ledit dispositif optique d'acquisition.

Le dispositif optique d'acquisition d'une image monoculaire est de tout type adapté. Il peut être un appareil photographique ou une caméra monoculaire, notamment une caméra monoculaire de surveillance d'un lieu public ou privé. Dans ce dernier cas, le système peut avantageusement être utilisée pour la reconstruction d'une image tridimensionnelle d'une pluralité d'individus humains évoluant dans un lieu public ou privé.

## Références

### Littérature non-brevet

Kocabas, Muhammed, et al. (2021), "SPEC: Seeing people in the wild with an estimated camera", Proceedings of the IEEE/CVF International Conference on Computer Vision.

Li, Zhihao, et al., (2022), "Cliff: Carrying location information in full frames into human pose and shape estimation", European Conference on Computer Vision. Cham: Springer Nature Switzerland.

Sun, Yu, et al. (2022), "Putting people in their place: Monocular regression of 3D people in depth", Proceedings of the IEEE/CVF Conference on Computer Vision and Pattern Recognition.

## Revendications

1. Méthode (5000), mise en œuvre par ordinateur, de reconstruction de l'enveloppe tridimensionnelle d'un objet (O) à partir d'une image monoculaire (1000), la méthode prend, en données d'entrée, une image monoculaire (1000) d'au moins un objet (O) dans une scène et la position (C), dans le repère du monde réel, du centre optique de la caméra (6001) représentative du dispositif optique d'acquisition de la dite image monoculaire (1000), et fournit, en donnée de sortie, une enveloppe tridimensionnelle dudit objet (O) dans ladite scène, la méthode comprend les étapes suivantes :

   (a) Fournir (5001) une enveloppe tridimensionnelle d'épreuve (E) de l'objet (O) par traitement de l'image monoculaire (1000) ;
   (b) Obtenir (5002) une première enveloppe tridimensionnelle modifiée (EH1) par application, sur l'enveloppe tridimensionnelle d'épreuve (E), d'une première transformation géométrique de sorte qu'un point représentatif (P1) d'une extrémité inférieure de l'enveloppe tridimensionnelle d'épreuve (E) soit contenu dans un premier plan (P) de référence préalablement défini correspondant à un sol ;
   (c) Obtenir (5003) une deuxième enveloppe tridimensionnelle modifiée (EH2) par application, sur la première enveloppe tridimensionnelle modifiée (EH1), d'une deuxième transformation géométrique de sorte qu'un plan longitudinal représentatif de l'objet soit perpendiculaire à un deuxième plan (D) de référence, ledit plan (D) de référence est défini par la position (C) du centre optique de la caméra (6001), le point (P1-1) représentatif d'une extrémité inférieure et un point (P2-1) représentatif d'une extrémité supérieure de la première enveloppe tridimensionnelle (EH1) ;
   (d) Obtenir (5004) une troisième enveloppe tridimensionnelle modifiée (EH3), par application, sur la deuxième enveloppe tridimensionnelle modifiée (EH2), d'une troisième transformation géométrique de sorte que les dimensions géométriques de la troisième enveloppe tridimensionnelle modifiée (EH3) projeté dans l'image monoculaire (1000) correspondent aux dimensions originales de l'objet (O) dans l'image monoculaire (1000).

**2.** Méthode (5000) selon la revendication 1, telle que première transformation géométrique est une homothétie avec la position (C) de la caméra comme le centre d'homothétie.

**3.** Méthode (5000) selon l'une quelconque des revendications 1 à 2, telle que deuxième transformation géométrique est une rotation ayant, pour centre de rotation, le point représentatif (P1-1) de l'enveloppe tridimensionnelle modifiée (EH1), de sorte qu'une première direction (U) représentative d'une direction longitudinale de l'objet et une deuxième direction (W) coïncident, la deuxième direction (W) est une projection orthogonale, dans le deuxième plan (D) de référence, d'une direction (Z) orthogonale au premier plan (P) de référence au point représentatif (P1-1) de la partie inférieure de la première enveloppe modifiée (EH1).

**4.** Méthode (5000) selon l'une quelconque des revendications 1 à 3, telle que troisième transformation géométrique est une homothétie avec le point représentatif (P1-1) de l'extrémité inférieure de l'enveloppe tridimensionnelle modifiée (EH3) comme centre d'homothétie.

**5.** Méthode (5000) selon l'une quelconque des revendications 1 à 4, telle que l'objet est un individu humain en position verticale et l'extrémité inférieure de l'enveloppe tridimensionnelle d'épreuve (E) de l'individu humain correspond aux pieds dudit individu humain.

**6.** Méthode (5000) selon la revendication 5, telle que partie supérieure de la première enveloppe tridimensionnelle (EH1) est choisie parmi la tête, le cou, les épaules, ou la poitrine de l'individu humain.

**7.** Méthode (5000) selon l'une quelconque des revendication 1 à 6, telle l'enveloppe tridimensionnelle d'épreuve (E) de l'objet est obtenue à l'aide d'un réseau de neurones artificiels convolutif préalablement entrainé.

**8.** Méthode (5000) selon l'une quelconque des revendications 1 à 7, telle qu'elle comprend en outre une étape d'ajout d'un arrière-plan choisi parmi un arrière-plan correspondant à celui de la scène de l'image monoculaire originale ou un arrière-plan artificiel.

**9.** Méthode (5000) selon l'une quelconque des revendications 1 à 8, telle qu'elle comprend en outre une étape de texturation l'enveloppe tridimensionnelle modifiée (EH3) de l'objet (O).

**10.** Méthode (5000) selon l'une quelconque des revendications 1 à 6, telle comprend en outre au moins une étape de changement de perspective ou d'angle de vue.

**11.** Utilisation d'une méthode selon l'une quelconque des revendications 1 à 10 pour la reconstruction d'une image tridimensionnelle d'une pluralité d'individus humains dans un lieu public ou privé.

**12.** Dispositif (11000) de traitement de données comprenant des moyens pour mettre en œuvre la méthode selon l'une quelconque des revendications 1 à 10.

**13.** Programme d'ordinateur comprenant des instructions qui, lorsque le programme est exécuté par un ordinateur, conduisent celui-ci à mettre en œuvre la méthode selon l'une quelconque des revendications 1 à 10.

**14.** Support (11004) de stockage lisible par ordinateur comprenant des instructions qui, lorsqu'elles sont exécutées par un ordinateur, conduisent celui-ci à mettre en œuvre la méthode selon l'une quelconque des revendications 1 à 10.

**15.** Système de reconstruction de la forme tridimensionnelle d'un objet (O) à partir d'une image monoculaire 1000, ledit système comprend :

- un dispositif optique d'acquisition d'une image monoculaire ;
- un dispositif (11000) de traitement de données selon la revendication 12 configuré pour recevoir une image monoculaire 1000 acquise par ledit dispositif optique d'acquisition.

[Fig. 1]

Fig. 1

[Fig. 2]

Fig. 2

[Fig. 3]

Fig. 3

[Fig. 4]

Fig. 4

[Fig. 5]

Fig. 5

[Fig. 6]

Fig. 6

[Fig. 7]

Fig. 7

[Fig. 8]

Fig. 8

[Fig. 9]

Fig. 9

[Fig. 10]

**Fig. 10**

[Fig. 11]

**Fig. 11**

**RAPPORT DE RECHERCHE EUROPEENNE**

Numéro de la demande

EP 25 16 0059

Europäisches
Patentamt

European
Patent Office

Office européen
des brevets

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | BOGO FEDERICA ET AL: "Keep It SMPL: Automatic Estimation of 3D Human Pose and Shape from a Single Image", 16 septembre 2016 (2016-09-16), COMPUTER VISION - ECCV 2016 : 14TH EUROPEAN CONFERENCE, AMSTERDAM, THE NETHERLANDS, OCTOBER 11-14, 2016 : PROCEEDINGS; [LECTURE NOTES IN COMPUTER SCIENCE; ISSN 0302-9743], SPRINGER, BERLIN, HEIDELBERG, PAGE(S) 561 - 578, XP047355099, ISBN: 978-3-319-46453-4 [extrait le 2016-09-16] * le document en entier * ----- | 1-15 | INV. G06T7/50 G06T17/00 |
| A | SUN YU ET AL: "Putting People in their Place: Monocular Regression of 3D People in Depth", 2022 IEEE/CVF CONFERENCE ON COMPUTER VISION AND PATTERN RECOGNITION (CVPR), IEEE, 18 juin 2022 (2022-06-18), pages 13233-13242, XP034193210, DOI: 10.1109/CVPR52688.2022.01289 * le document en entier * ----- | 1-15 | |
| A | JIANG WEN ET AL: "Coherent Reconstruction of Multiple Humans From a Single Image", 2020 IEEE/CVF CONFERENCE ON COMPUTER VISION AND PATTERN RECOGNITION (CVPR), IEEE, 13 juin 2020 (2020-06-13), pages 5578-5587, XP033804805, DOI: 10.1109/CVPR42600.2020.00562 * le document en entier * ----- -/-- | 1-15 | |

**DOMAINES TECHNIQUES RECHERCHES (IPC)**

G06T

Le présent rapport a été établi pour toutes les revendications

| Lieu de la recherche | Date d'achèvement de la recherche | Examinateur |
|---|---|---|
| Munich | 31 mars 2025 | Tillier, Christophe |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
....................................................................
& : membre de la même famille, document correspondant

EPO FORM 1503 03.82 (P04C02)

page 1 de 2

Europäisches
Patentamt

European
Patent Office

Office européen
des brevets

**RAPPORT DE RECHERCHE EUROPEENNE**

Numéro de la demande

EP 25 16 0059

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | DEREK HOIEM: "Representations and Techniques for 3D Object Recognition and Scene Interpretation", SYNTHESIS LECTURES ON ARTIFICIAL INTELLIGENCE AND MACHINE LEARNING, 1 août 2011 (2011-08-01), pages 1-157, XP055620426, DOI: 10.2200/S00370ED1V01Y201107AIM015 * le document en entier * ----- | 1-15 | |

DOMAINES TECHNIQUES RECHERCHES (IPC)

Le présent rapport a été établi pour toutes les revendications

| Lieu de la recherche | Date d'achèvement de la recherche | Examinateur |
|---|---|---|
| Munich | 31 mars 2025 | Tillier, Christophe |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
..............................................................................
& : membre de la même famille, document correspondant

EPO FORM 1503 03.82 (P04C02)

page 2 de 2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **KOCABAS, MUHAMMED et al.** SPEC: Seeing people in the wild with an estimated camera. *Proceedings of the IEEE/CVF International Conference on Computer Vision*, 2021
- Cliff: Carrying location information in full frames into human pose and shape estimation. **LI, ZHIHAO et al.** European Conference on Computer Vision. Springer Nature, 2022
- **SUN, YU et al.** Putting people in their place: Monocular regression of 3D people in depth. *Proceedings of the IEEE/CVF Conference on Computer Vision and Pattern Recognition*, 2022

- **KOCABAS, MUHAMMED et al.** SPEC: Seeing people in the wild with an estimated camera. *Proceedings of the IEEE/CVF International Conference on Computer*, 2021
- Cliff: Carrying location information in full frames into human pose and shape estimation. **VISION, LI, ZHIHAO et al.** European Conference on Computer Vision. Springer Nature, 2022
- Cliff: Carrying location information in full frames into human pose and shape estimation. **LI, ZHIHAO et al.** European Conference on Computer Vision. Cham: Springer Nature Switzerland, 2022